# EUROPEAN PATENT APPLICATION

(11) **EP 1 785 285 A2**
(43) Date of publication of application: **16.05.2007**
(21) Application number: 06022750.1
(22) Date of filing: 31.10.2006
(51) Int. Cl.: B60C 11/01, B29D 30/30, B29D 30/60

(54) **Tire for motorcycle and method for manufacturing the same**

(30) Priority: 09.11.2005 JP 2005325139
(71) Applicant: Sumitomo Rubber Industries Ltd, Kobe-shi, Hyogo-ken (JP)
(72) Inventor: Hayashi, Norio, Chuo-ku Kobe-shi Hyogo-ken (JP)
(74) Representative: Manitz, Finsterwald & Partner GbR

(57) **Abstract**

A motorcycle tire having a tread rubber G composed of a pair of shoulder rubber portions Gs located on both tread edge Te sides and a central rubber portion Gc located between them, wherein each shoulder rubber portion Gs has an axial width Ws of 1/4 to 3/8 time the tread width TW and is made from a rubber member 12 formed by helically winding a long rubber strip 11 in an overlapping manner in the circumferential direction of the tire in which the winding is started from the tread edge Te side and advanced toward the tire equator C.

## Description

### BACKGROUND OF THE INVENTION

The present invention relates to a tire for motorcycles, and more particularly to a motorcycle tire comprising a tread rubber in which shoulder rubber portions thereof are formed by a strip winding method, whereby an occurrence of separation damages between rubber strips can be reduced effectively, and a method for manufacturing the same.

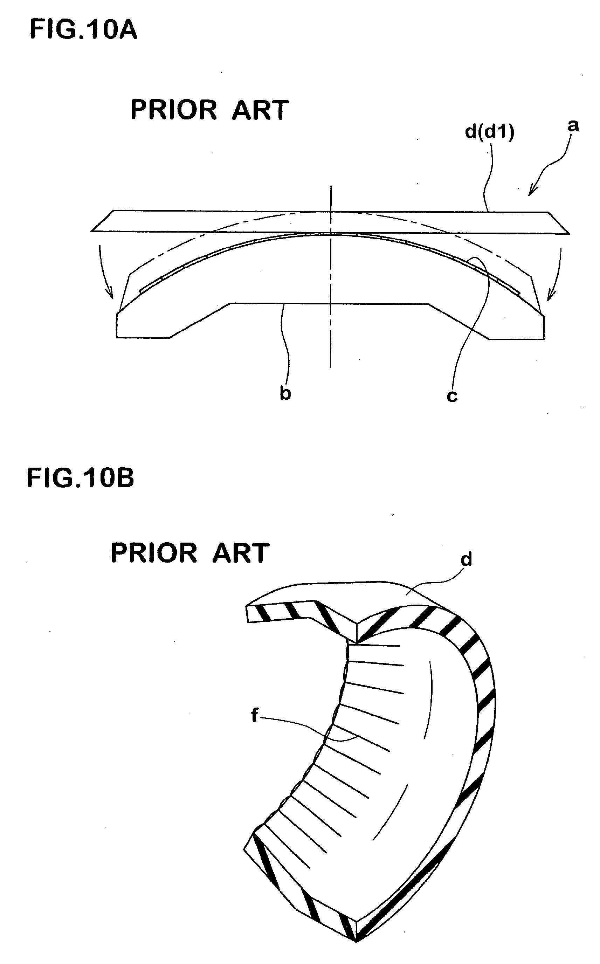

Since a motorcycle is steeply banked in cornering, the tread portion of motorcycle tires is formed to have an arc-like convex profile with a small radius of curvature in transverse cross section. In a conventional method, as illustrated in Fig.10(A), a tread "a" of this type of tires is produced using a profile deck or drum (former) "b" having a profile consistent with the arc-like profile of the tires, on which a band ply "c" and a tread rubber "d" are stacked one by one along the outer surface thereof. In this method, a wide-width flat rubber member "d1" is employed as a tread rubber "d". The rubber member "d1" is rolled into a right circular cylindrical form and is then pressed onto the profile deck "b" by stitchers applied from a tire equator side to the tread edges to form a curved tread rubber on the band ply "c". Hereinafter, this conventional method may be referred to as a "one rolling method" or "one round winding method".

Since a sharply curved tread rubber is formed by such a method, creases "f" generate on both edge portions of the tread rubber "d" owing to a difference in peripheral length, as shown in Fig. 10(B). The generation of creases renders the thickness of the tread rubber uneven to impair the uniformity of the tire.

On the other hand, it is known to form a rubber member such as tread rubber, sidewall rubber, clinch rubber, breaker cushion rubber, inner liner rubber or the like by a so-called strip winding method wherein a rubber member is formed by helically winding a rubber strip as disclosed, for example, in JP-A- 2000-94542.

The present inventor proposed to prepare the tread rubber of a motorcycle by the strip winding method in order to prevent generation of the creases "f" as explained above.

However, the strip winding method has the disadvantage that it provides a saw-tooth appearance on the surface and the saw tooth-like steps still remain as microscopic scars even after the vulcanization. In case of usual tires for automobiles, such unevenness in the surface of a tread rubber does not affect the tire performance. However, in case of tires for motorcycles which are steeply banked in cornering, a large lateral force acts on the tread surface in cornering. Therefore, simple and easy application of the strip winding method to the preparation of tread rubber of motorcycle tires causes a new problem that in cornering, the tire is distorted and may suffer damage of separation between the rubber strips which occurs starting from the above-mentioned scars.

Additionally, occurrence of such a separation between the wound rubber strips is apt to increase when a rubber having a large hysteresis loss which provides a good grip performance is employed to prepare the shoulder regions of a tread rubber for the purpose of enhancing the cornering performance of motorcycle tires according to recent demands.

Accordingly, it is an object of the present invention to provide a tire for motorcycles which has an improved cornering performance and an excellent durability.

Another object of the present invention is to provide a method for manufacturing a tire for motorcycles having an enhanced cornering performance while effectively suppressing separation between rubber strips in the tread rubber even in the case where a rubber having a high hysteresis loss is used in the shoulder regions to obtain an excellent grip performance.

These and other objects of the present invention will become apparent from the description hereinafter.

### SUMMARY OF THE INVENTION

It has been found that the objects of the present invention as mentioned above can be achieved when the tread rubber of a motorcycle tire is divided into three portions comprising a pair of shoulder rubber portions and a central rubber portion between them, and the shoulder rubber portions are formed by a strip winding method wherein a rubber strip is wound from each tread edge toward the tire equator.

In accordance with the present invention, there is provided a motorcycle tire comprising a tread portion with a tread surface curved convexly and extending from the tire equator to the both tread edges so that the tread width TW defined by the axial distance between the tread edges provides the maximum width of the tire, wherein a tread rubber which constitutes the tread portion comprises a pair of shoulder rubber portions and a central rubber portion between them, and each shoulder rubber portion has an axial width Ws of 1/4 to 3/8 the tread width TW and is made from a rubber member formed by helically winding a long rubber strip in an overlapping manner in the circumferential direction of the tire in which the winding is started from the tread edge side and advanced toward the tire equator.

Preferably, the shoulder rubber portions have a loss tangent (tan δ1) of 0.20 to 0.35 which is larger than a loss tangent (tan δ2) of the central rubber portion.

The present invention also provides a method for manufacturing a motorcycle tire comprising a tread portion with a tread surface curved convexly and extending from the tire equator to the both tread edges so that the tread width TW defined by the axial distance between the tread edges provides the maximum width of the tire, wherein a tread rubber which constitutes the tread portion comprises a pair of shoulder rubber portions and a central rubber portion between them, and each shoulder rubber portion has an axial width Ws of 1/4 to 3/8 the tread width TW, the method comprising a step of forming a pair of raw shoulder rubber portions to provide the shoulder rubber portions by helically winding raw rubber strips around a mounting face of an annular body from each of the tread edge sides toward the tire equator side in an overlapping manner, and a step of forming a raw central rubber portion between a pair of the raw shoulder rubber portions.

The raw central rubber portion may be formed either by winding a wide-width raw flat rubber material one round into a single-ply cylindrical form and joining its both ends overlapped in the tire circumferential direction (lap jointing), or by helically winding a raw rubber strip suitable for the central rubber portion in an overlapping manner (lap winding manner) in a region located between the raw shoulder rubber portions on the mounting face of the cylindrical body.

Since the both shoulder portions and the central portion of a tread rubber are separately prepared in a manner as mentioned above, it is possible to exhibit advantages of the strip winding method fully and, moreover, the separation between the overlapped wound rubber strip can be effectively prevented even if the shoulder portion of the tread rubber is prepared from a rubber having a high hysteresis loss in order to enhance the grip performance. Thus, the motorcycle tire of the present invention has an enhanced cornering performance while securing an excellent durability.

### BRIEF DESCRIPTION OF THE DRAWINGS

Fig. 1 is a cross sectional view of a motorcycle tire showing an embodiment of the present invention;
Fig. 2 is a cross sectional view of a tread portion of the tire shown in Fig. 1;
Fig. 3 is a cross sectional view illustrating the function and effect of the invention;
Fig. 4 is a cross sectional view illustrating a method for manufacturing motorcycle tires according to the present invention, particularly a step of forming a raw shoulder rubber portion of a tread rubber in the method;
Fig. 5A and Fig. 5B are cross sectional views illustrating a step of forming a central rubber portion of the tread rubber in the method according to the present invention;
Fig. 6 is a schematic view showing a winding of rubber strips;
Fig. 7 is a cross sectional view showing a rubber strip;
Fig. 8 is a cross sectional view illustrating another method for manufacturing motorcycle tires according to the present invention;
Figs. 9A to 9G are cross sectional views schematically showing the structure of each of tread rubbers used in Examples and Comparative Examples shown in Table 1 described after, wherein Fig. 9A shows a conventional tread rubber;
Fig. 10A is a schematic view illustrating a conventional method for forming a tread rubber; and
Fig. 10B is a partial perspective view showing a problem of a conventional method as shown in Fig. 10A.

### DETAILED DESCRIPTION OF THE INVENTION

An embodiment of the present invention will now be explained with reference to the accompanying drawings.

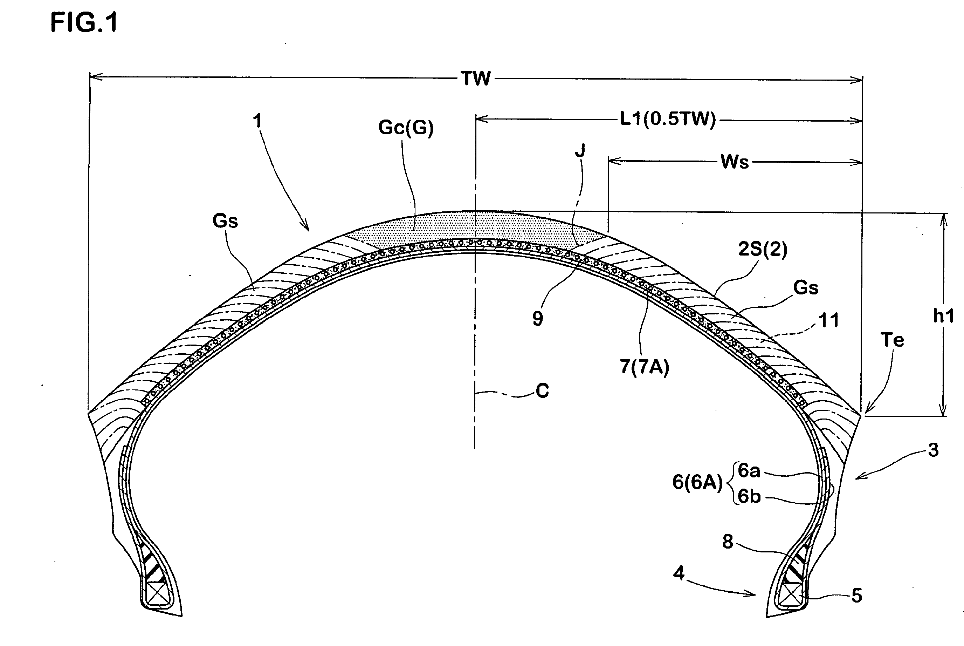

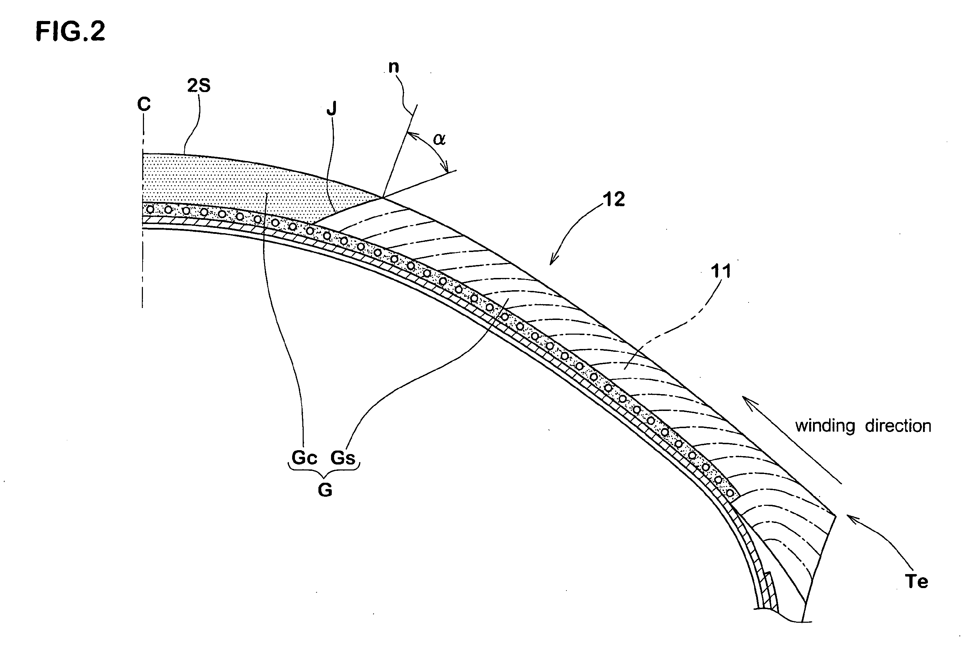

Referring to Fig. 1 and Fig. 2, a motorcycle tire 1 according to the present invention has a tread portion 2 whose tread surface 2S extends from tire equator C to both tread edges Te and warps convexly in an arc-like manner. In this embodiment, the tread width TW defined by an axial distance between the tread edges Te provides the maximum width of the tire, thereby enabling cornering at a large banking angle. Figs. 1 and 2 show a preferable embodiment in which the camber value h1/L1 in the tread surface 2 S is set in a range of 0.3 to 0.7, wherein h 1 is a radial height from the tread edge Te to the tire equator C on the tread surface 2S, and L1 is an axial distance from the tire equator C to the tread edge Te (i.e., 0.5TW).

The motorcycle tire 1 further includes a carcass 6 that extends from the tread portion 2 to each of a pair of bead cores 5 in opposing bead portions 4 through sidewall portions 3, a band layer 7 that is disposed radially outward of the carcass 6 in the tread portion 2.

The carcass 6 comprises at least one carcass ply 6A (in this embodiment, one carcass ply) in which carcass cords are arranged at an angle of, for instance, 70 to 90° with respect to the tire equator C. The carcass ply 6A is composed of a main portion 6a that extends from one bead core 5 to the opposing bead core 5, and turnup portions 6b that extend from the both ends of the main body portion 6a and are turned up around the bead cores 5 from the axially inside to the axially outside of the tire to thereby anchor the carcass ply.

Between the main portion 6a and each turnup portion 6b is disposed a bead apex rubber 8 for reinforcement of the bead portions that extends radially outwardly from the bead core 5 in a tapered manner.

The band layer 7 comprises at least one ply (in this embodiment, one band ply 7A) of cords spirally wound at an angle of, for instance, not more than 5° with respect to the tire equator C. The band ply 7A has a width of not less than 75 % of the tread width TW and disposed with the center of the width aligned with the tire equator C. The band layer strongly reinforces the tread portion 2 with a hoop effect.

A belt layer (not shown) comprising at least one ply, usually two plies, of cords arranged at an angle of, for example, 15 to 60° with respect to the tire equator C may be disposed instead of the band layer 7 or may be additionally disposed between the carcass 6 and the band layer 7 for the purpose of increasing the tread rigidity to thereby improve the steering stability.

The band layer 7 and the belt layer are collectively referred to as "a tread-reinforcing cord layer 9".

As the cords for carcass, band and belt are suitably employed organic fiber cords such as nylon, rayon, polyester, aromatic polyamide and the like.

In the present invention, for the simultaneous achievement of improvements in straight running performance and cornering performance, a tread rubber G which constitutes the tread portion 2 is divided into three portions comprising a pair of shoulder rubber portions Gs and a central rubber portion Gc located between them, which are made from different rubber compositions.

The shoulder rubber portions Gs are portions which come into contact with a road when a motorcycle performs cornering, and for such purpose, the axial width Ws of each shoulder rubber portion Gs, which is an axial distance from its axially inner edge on the tread surface 2S to the tread edge Te, is set in the range of 1/4 to 3/8 time the tread width TW (i.e., 25 to 37.5 % of the tread width). If the axial width Ws exceeds 3/8 time the tread width TW, the shoulder rubber portions Gs will contact a road even at the time of straight running of a motorcycle, thus impairing improvement of the straight running performance. If the axial width Ws is less than 1/4 time the tread width TW, the effect to improvement in cornering performance is insufficient.

Since a motorcycle is steeply banked in cornering, it is particularly important for motorcycle tires to improve the grip performance in cornering from the viewpoint of safe driving. For this purpose, the shoulder rubber portions Gs are formed of a rubber having a high hysteresis loss which exhibits a large frictional resistance, namely a loss tangent (tan δ1) of 0.20 to 0.35. On the other hand, the central rubber portion Gc is formed of a rubber having a low hysteresis loss, namely a loss tangent (tan δ2) smaller than the tan δ1 of the shoulder rubber portions Gs. The lower the hysteresis loss, the smaller the rolling resistance and heat generation. Therefore, such a central rubber portion Gc can improve performances required in straight running such as fuel cost performance and high-speed durability, while exhibiting an excellent wear resistance. For such purpose, it is preferable that the loss tangent (tan δ2) of the central rubber portion Gc is not more than 90 %, especially not more than 80 %, of the loss tangent tan δ1 of the shoulder rubber portions Gs.

The "loss tangent" (tan δ) as used herein denotes a value measured by a viscoelasticity spectrometer made by Kabushiki Kaisha Iwamoto Seisakusho under the conditions of measuring temperature 70°C, frequency 10 Hz, initial strain 10% and dynamic strain ±2%.

A boundary line J (joint line J) between the shoulder rubber portion Gs and the central rubber portion Gc of the tread rubber G in the cross section of the tire is preferably inclined at an angle α of not less than 30° with respect to the normal line n from the tread surface 2S so that change in characteristics of the rubbers from the central rubber portion Gc to the shoulder rubber portions Gs can be smoothly achieved in the jointed region, whereby the shift from straight running to cornering is effected smoothly. Such a joint line J is also advantageous in securing strong adhesion between the shoulder rubber portion Gs and the central rubber portion Gc, since the joint face is increased.

In the present invention, each of the shoulder rubber portions Gs is made of a rubber member 12 formed by helically winding a long rubber strip 11 in the tire circumferential direction, wherein the winding is specified as it proceeds from one tread edge Te toward the tire equator C. The thus formed rubber member is vulcanized in a later stage to give the shoulder rubber portion Gs.

By employing the strip winding method, it is possible to directly form a tread rubber G having a contour in a small arc-like form corresponding to a desired tread profile of the finished tire. Thus, generation of creases "f" in tread edge portions as encountered in a conventional method and as illustrated in Fig. 10B can be prevented, and a tread rubber having a uniform thickness is formed. Further, other advantages of the strip winding method are obtained. For example, since a large-sized rubber extruder is not required, and since it is not necessary to store, as an intermediate stock, various extrudates which vary depending on tire size, purposes and the like, the productivity is increased and a space saving can be achieved.

As stated above, a rubber member formed by the strip winding method has a saw tooth-like appearance since a strip is spirally wound in an overlapping manner (lap winding manner), and the steps still remain as microscopic scars even after the vulcanization. Since a large lateral force acts on the tread surface when a motorcycle is banked in cornering, separation damages starting from such scars may occur between the adjacent windings 11, 11 of the rubber strip.

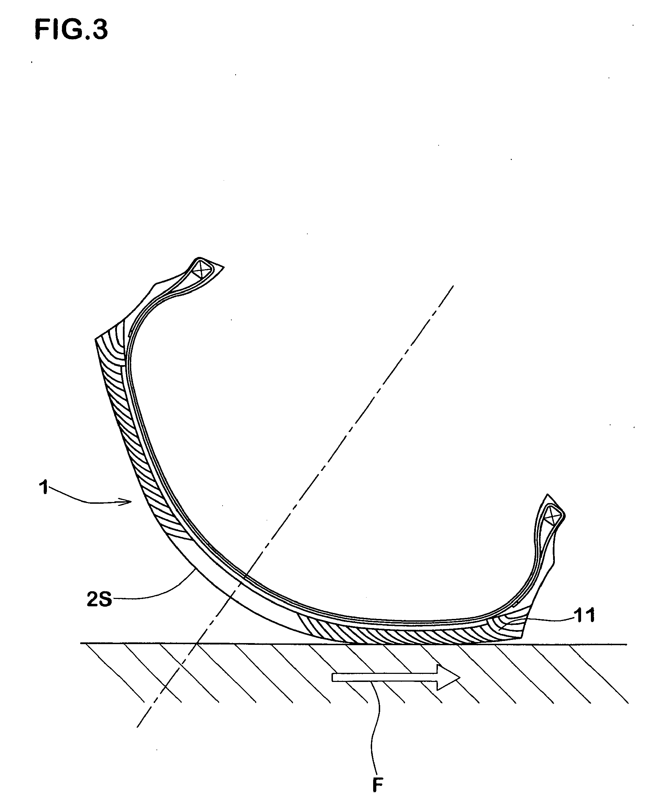

In the present invention, in order to prevent such a problem from occurring, the winding of rubber strip 11 in the circumferential direction for forming each shoulder rubber portion Gs is effected to proceed from the tread edge Te toward the tire equator C. As shown in Fig. 3, a lateral force F acting on the tread surface 2S when cornering works reverse to the direction that the rubber strip 11 in the shoulder rubber portion Gs peels off in view of the winding direction of the rubber strip 11. Therefore, the separation damages in the shoulder rubber portions Gs can be surely prevented, and it is still effective even in the case where the shoulder rubber portions Gs are formed from a rubber having a high hysteresis loss.

Additionally, as a result of the winding in a manner as mentioned above, the axially inner end of the wound strip, i.e., joint line J between the shoulder rubber portion Gs and the central rubber portion Gc of the tread rubber G, inclines in the same direction as the inclination direction of the rubber strip 11, namely in the direction of the axially outward of the tire. Therefore, separation damage between the portions Gs and Gc can also be prevented.

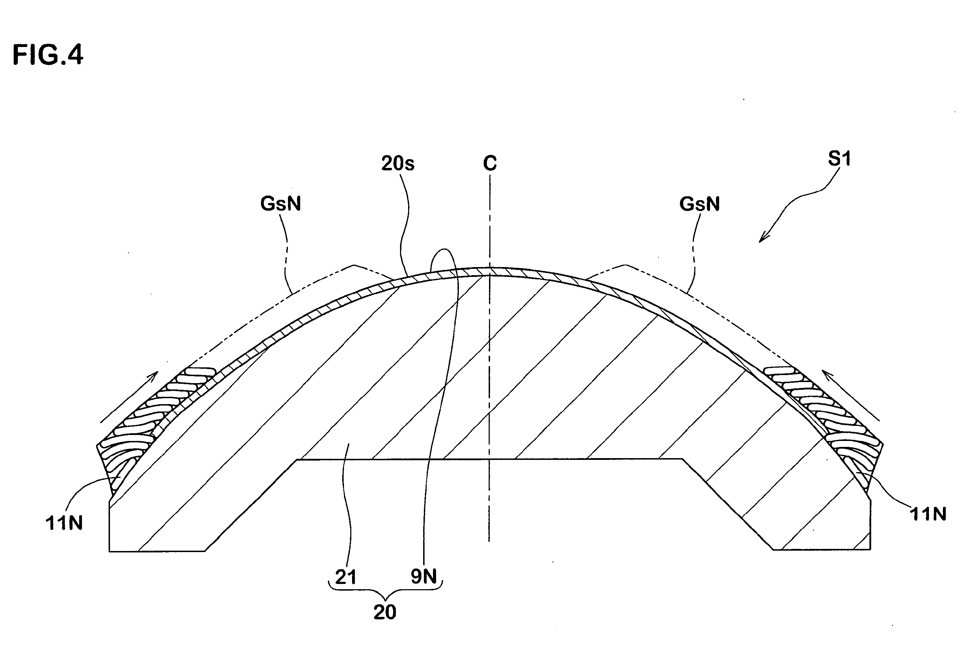

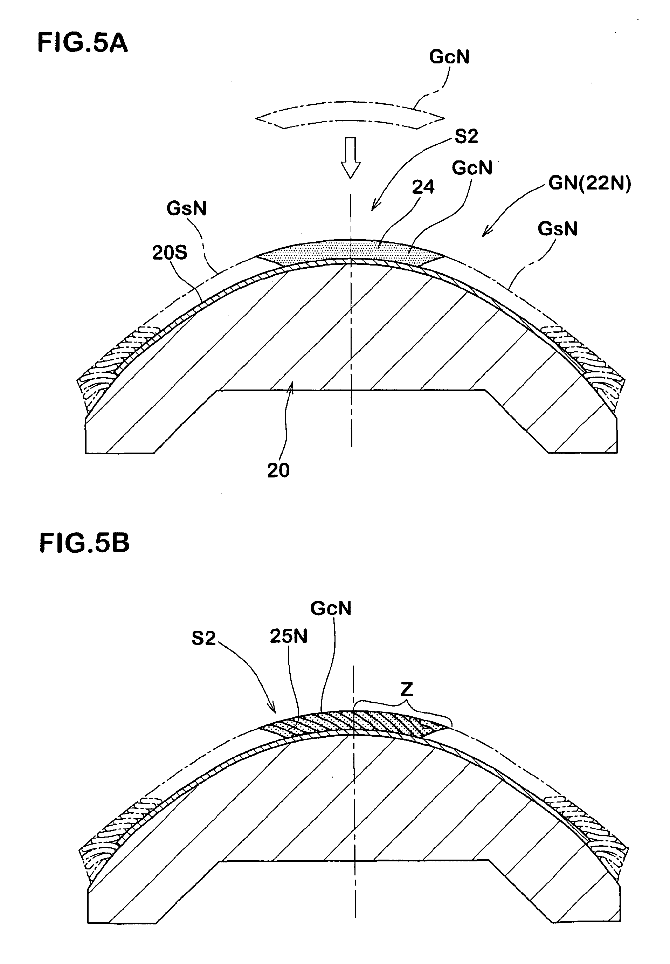

Next, a method of manufacturing the motorcycle tire 1 is explained. The method includes at least the following steps (1) and (2) with respect to formation of a green tire.
(1) A step S 1 of forming a pair of raw shoulder rubber portions wherein, as shown in Fig.4, a pair of raw shoulder rubber portions GsN are formed by helically winding raw (unvulcanized) rubber strips 11N around a mounting face 20S of an annular body 20 from each of the tread edge Te sides toward the tire equator C side in an overlapping manner such that in cross section, adjacent strips overlap with each other (lap winding). The annular body 20, i.e., mounting face 20S of the annular body 20, has a convex profile corresponding to the tread profile of a finished tire.
(2) A step S2 of forming a raw central rubber portion wherein, as shown in Figs. 5A and 5B, a raw central rubber portion GcN is formed between the raw shoulder rubber portions GsN, GsN formed in the step S1.

Figs. 4, 5A and 5B show a case where the annular body 20 to be wound by the raw rubber strips 11N comprises a profile deck or drum 21 for forming a tread, and a raw tread-reinforcing cord layer 9N formed around the periphery of the profile deck 21. However, the annular body 20 to be wound by the strips 11 N is not limited to such a profile deck provided with the raw tread-reinforcing cord layer, and it may be a suitable raw tire base body (tire component or components) which is required for producing a desired tire and is supported by a suitable annular support having the same profile as the tread profile of the desired tire. In Figs. 4, 5A and 5B, the raw tread-reinforcing cord layer 9N may be a raw band layer alone or a combination of a raw band layer and a raw belt layer. The outer surface of the annular body 20 presents the mounting face 20S. A raw tread rubber GN is formed on the mounting face 20S in accordance with the steps S 1 and S2 to give a raw tread ring 22N. The raw tread ring 22N is transferred and applied onto a cylindrical laminate body composed of, for example, a raw inner liner rubber and a raw carcass ply which is placed on a former and is then inflated to a toroidal form (shaping) to give a green tire. The green tire is then vulcanized in a usual manner to give a finished tire.

Other steps than the above-mentioned steps S1 and S2, which are required for the manufacture of motorcycle tires, can be carried out in known manners, e.g., a step of forming a raw tread-reinforcing cord layer 9N on a profile deck 21, a step of forming a laminate body composed of a raw inner liner rubber and a raw carcass ply into a cylindrical shape, a step of providing bead cores on both edge portions of the cylindrical laminate body, a step of inflating (shaping) the laminate body into a toroidal form in a region between the bead cores, a step of adhering the raw tread ring 22N to the inflated portion of the inflated laminate body to give a green tire, a step of vulcanizing the green tire, and the like. Therefore, such steps other than the steps S1 and S2 are not explained herein.

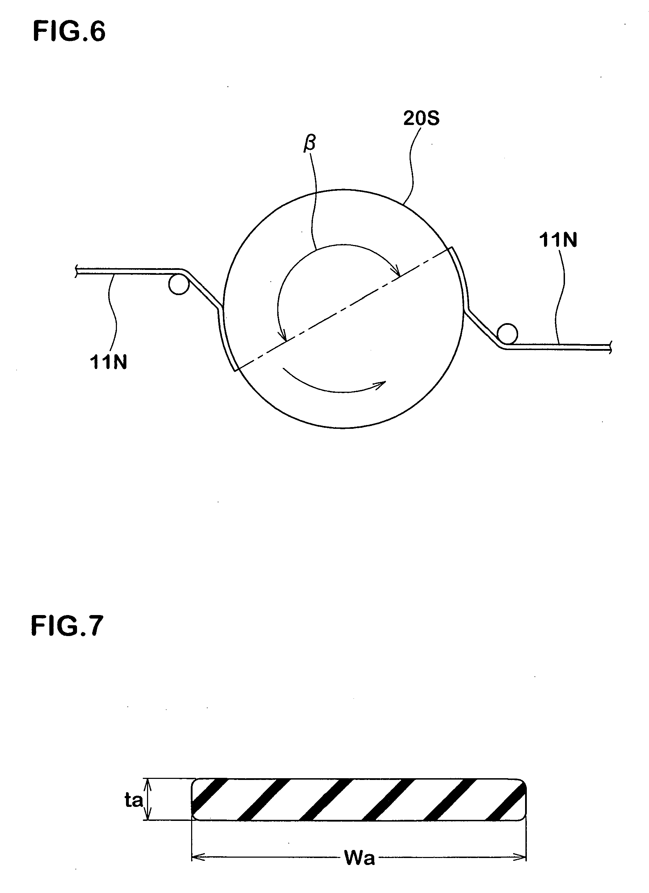

In the step S1 of forming raw shoulder rubber portions, a pair of raw rubber strips 11N are simultaneously, helically wound around the annular body 20 in the tire circumferential direction, starting from each tread edge Te and toward the tire equator C, in an overlapping manner, thereby forming a pair of raw shoulder rubber portions GsN. From the viewpoint of uniformity, it is preferable to wind the strips in such a manner that, as shown in Fig. 6, the circumferential phase shift between the winding start and finish ends of one strip 11 N and those of another strip 11 is an angle β of preferably not less than 90 degrees, especially 180 degrees.

The raw rubber strip 11N is preferably a thin rubber tape having a rectangular cross section, as shown in Fig. 7, and having a width Wa of 5 to 25 mm and a thickness "ta" of 0.5 to 3.0 mm.

In the step S2 of forming a raw central rubber portion, as shown in Fig. 5A, a wide-width flat raw rubber material 24 suitable for forming the central rubber portion Gc and extruded from an extruder is employed for the raw central rubber portion GcN. A flat board-like raw rubber material 24 having a width corresponding to the width of a space between a pair of the raw shoulder rubber portions GsN is wound one round around the annular body 20 to fit in the space in the crown region. The both end portions of the rubber material 24 in the circumferential direction of the annular body 20 are overlapped and joined to form a lap joint, thus forming a raw central rubber portion GcN. Since the width of the flat raw rubber material 24 is not so large and it is disposed so that the axial both edge portions thereof are laid on the winding finish ends (joint line J) of the raw shoulder rubber portions GsN formed by winding the rubber strips, a difference in the peripheral length of the central rubber portion GcN is hardly caused and accordingly wrinkles are not generated in the central rubber portion GcN.

The step S2 of forming a raw central rubber portion GcN can be performed in a different manner as above. Fig. 5B shows another example of the step S2. In this example, the raw central rubber portion GcN is formed by spirally winding in the circumferential direction of the tire a long raw rubber strip 25N which is similar to the rubber strip 11N but is suitable for forming the central rubber portion Gc, in a region between the raw shoulder rubber portions GsN in an overlapping manner. As explained above, in the cornering of a motorcycle, the shoulder rubber portions Gs of the tire is distorted by a strong lateral force F, but the central rubber portion Gc is not affected thereby. Also, such a lateral force F does not generate at the time of straight running. Therefore, although the wound rubber strip 25N in a region Z located on one side of the central rubber portion Gc with respect to the tire equator is inclined in the same direction as the direction of separation by lateral force F, separation damage of rubber strip in the region Z does not occur.

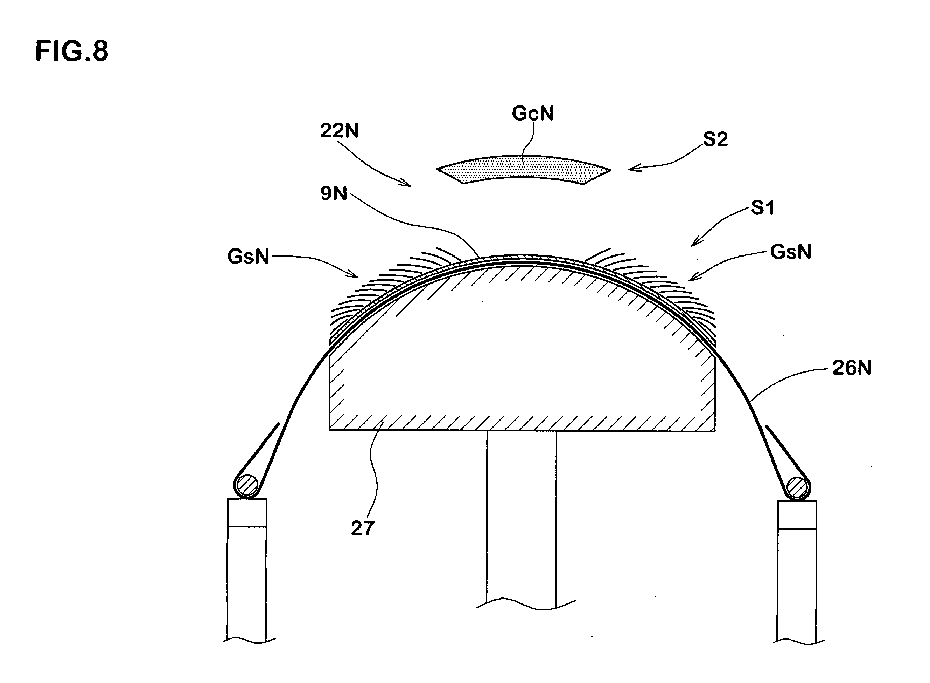

The tread ring 22N can be directly formed on a laminate body 26N comprising a raw inner liner rubber and a raw carcass ply. As shown in Fig. 8, the laminate body 26N is placed on an expandable drum 27 capable of increasing the diameter and having the same profile as the profile deck 21 mentioned above, in other words, the same profile as the tread profile of the desired tire, and inflated (shaped) by the expandable drum 27 into a toroidal form. After forming a raw tread-reinforcing cord layer 9N on the laminate body 26N supported by the expanded drum 27, a tread ring 22N is formed thereon in the same manner as above. In this case, the annular body 20 to be wound by a rubber strip is constituted by the toroidal laminate body 26N and the raw tread-reinforcing cord layer 9N formed on the periphery of the laminate body 26N.

While preferable embodiments of the present invention have been described with reference to the drawings, it goes without saying that the present invention is not limited to only such embodiments and various changes and modifications may be made.

### Comparison Test

Motorcycle tires (size: 180/55 ZR17) having the structure shown in Fig. 1 were manufactured based on the specifications shown in Table 1, and were tested for uniformity, cornering grip performance and separation resistance of tread rubber by the methods described below. Specifications of tires which are not described in the table are substantially common to all tires.

A rubber strip used in the strip winding had a width Wa of 20 mm and a thickness "ta" of 1.0 mm.

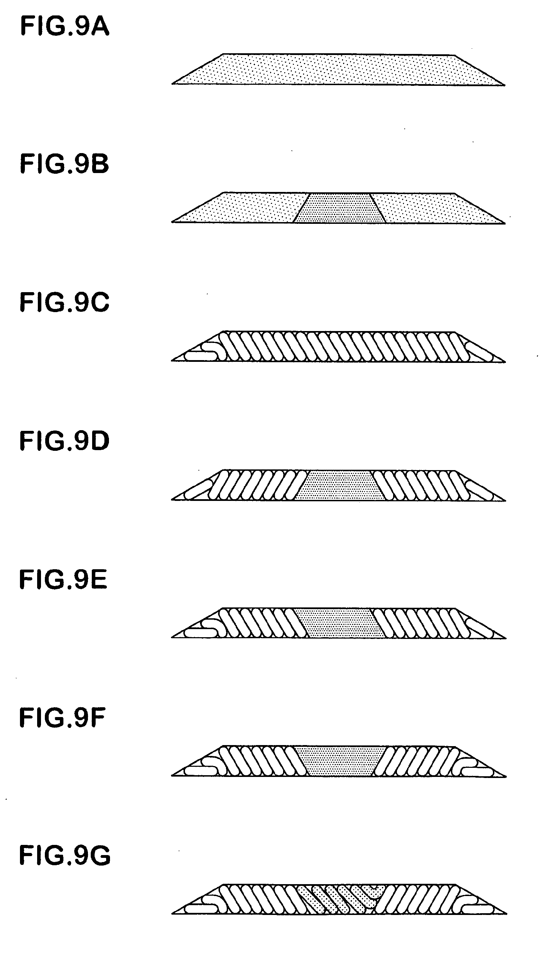

Tread rubber structures of tires shown in Table 1 are shown in Figs. 9A to 9G. In Table 1, Control shows a conventional method wherein a tread rubber is produced from a flat board-like raw rubber material as shown in Fig. 9A.

### (1) Uniformity

RFV (O. A.) of tires were measured using a uniformity tester under conditions of tire pressure 200kPa, rim 17 x MT5.50 and load 2.26 kN. An average value obtained with respect to each tire is indicated by an index to the result of Control regarded as 100. The smaller the numeric value, the better the uniformity.

### (2) Cornering grip performance

Test tires were attached to a 500 cc motorcycle and inflated to 200 kPa, and the motorcycle was run on a racing course. The grip performance in cornering was evaluated by driver's feeling. The result is indicated by an index to the result of Control regarded as 100. The larger the index value, the better the cornering grip performance.

### (3) Separation resistance of tread rubber

A tire was run on a drum of a drum tester under conditions of inner pressure 200 kPa, load 2.26 kN, slip angle 2° and speed 50 km/h. In the test, the tire was tilted on one side at a camber angle of 40° and run for 1 hour, and it was then tilted on the other side in the same - manner and run for 1 hour. After the running, presence of separation damages was visually observed.

Test results are shown in Table 1.

**Table 1**

| | Control | Com. Ex. 1 | Com. Ex. 2 | Com Ex.3 | Com. Ex.4 | Ex. 1 | Ex. 2 |
|---|---|---|---|---|---|---|---|
| Tread rubber structure | Fig. 9A | Fig. 9B | Fig. 9C | Fig. 9D | Fig. 9E | Fig. 9F | Fig. 9G |
| | one round winding | one round winding | strip winding | strip winding | strip winding + one round winding | strip winding + one round winding | strip winding + strip winding |

| Shoulder rubber portion | | | | | | | |
|---|---|---|---|---|---|---|---|
| Ws/TW ratio | - | 1/3 | 1/3 | 1/3 | 1/3 | 1/3 | 1/3 |
| Loss tangent (tan δ1) | 0.25 | 0.28 | 0.28 | 0.28 | 0.28 | 0.28 | 0.28 |

| Central rubber portion | | | | | | | |
|---|---|---|---|---|---|---|---|
| Loss tangent (tan δ2) | 0.25 | 0.25 | 0.28 | 0.35 | 0.25 | 0.25 | 0.25 |
| Uniformity | 100 | 102 | 115 | 110 | 107 | 110 | 113 |
| Cornering grip performance | 100 | 120 | 100 | 120 | 120 | 120 | 120 |
| Separation resistance of tread rubber* 1 | good | not good | not good | not good | not good | good | good |

| | | | | | | | |
|---|---|---|---|---|---|---|---|
| *1) "Good" means that there is no separation damage. "Not good" means that slight separation is observed. | | | | | | | |

## Claims

1. A motorcycle tire comprising a tread portion with a tread surface curved convexly and extending from the tire equator to the both tread edges so that the tread width TW defined by the axial distance between the tread edges provides the maximum width of the tire, wherein a tread rubber which constitutes the tread portion comprises a pair of shoulder rubber portions and a central rubber portion located between them, and each shoulder rubber portion has an axial width Ws of 1/4 to 3/8 time the tread width TW and is made from a rubber member formed by helically winding a long rubber strip in an overlapping manner in the circumferential direction of the tire in which the winding is started from the tread edge side and advanced toward the tire equator.

2. The motorcycle tire of claim 1, wherein the shoulder rubber portions have a loss tangent of 0.20 to 0.35 which is larger than a loss tangent of the central rubber portion.

3. A method for manufacturing a motorcycle tire comprising a tread portion with a tread surface curved convexly and extending from the tire equator to the both tread edges so that the tread width TW defined by the axial distance between the tread edges provides the maximum width of the tire, wherein a tread rubber which constitutes the tread portion comprises a pair of shoulder rubber portions and a central rubber portion located between them, and each shoulder rubber portion has an axial width Ws of 1/4 to 3/8 time the tread width TW, the method comprising a step of forming a pair of raw shoulder rubber portions to provide the shoulder rubber portions by helically winding raw rubber strips around a mounting face of an annular body from each of the tread edge sides toward the tire equator side in an overlapping manner, and a step of forming a raw central rubber portion between a pair of the raw shoulder rubber portions, thereby providing a raw tread rubber.

4. The method of claim 3, wherein the step of forming the raw central rubber portion is performed by winding a wide-width raw flat rubber material one round and joining its both ends overlapped in the tire circumferential direction to form a lap joint.

5. The method of claim 3, wherein the step of forming the raw central rubber portion is performed by helically winding a raw rubber strip in an overlapping manner in a region located between the raw shoulder rubber portions on the mounting face of the cylindrical body.

6. The method of claim 3, wherein the shoulder rubber portions have a loss tangent of 0.20 to 0.35 which is larger than a loss tangent of the central rubber portion.

7. The method of claim 3, wherein the annular body to be wound by a raw rubber strip includes a tread-reinforcing cord layer.

8. The method of claim 3, wherein the annular body to be wound by a raw rubber strip includes a tread-reinforcing cord layer, a carcass ply and an inner liner layer.

9. The method of claim 3, wherein the raw tread rubber is formed on the annular body including a raw tread-reinforcing cord layer, and the resulting tread ring comprising the raw tread rubber and the raw tread-reinforcing cord layer is fitted onto a toroidally shaped laminate body comprising a raw inner liner rubber and a raw carcass ply to give a green tire.
